(19) Europäisches Patentamt
European Patent Office
Office européen des brevets

(11) EP 4 280 790 A1

(12) EUROPEAN PATENT APPLICATION
published in accordance with Art. 153(4) EPC

(43) Date of publication:
22.11.2023 Bulletin 2023/47

(21) Application number: 22739613.2

(22) Date of filing: 11.01.2022

(51) International Patent Classification (IPC):
H04W 74/08 (2009.01)    H04W 74/00 (2009.01)
H04W 72/12 (2023.01)    H04W 72/04 (2023.01)
H04W 56/00 (2009.01)    H04W 84/06 (2009.01)

(52) Cooperative Patent Classification (CPC):
H04W 56/00; H04W 72/04; H04W 72/12;
H04W 74/00; H04W 74/08; H04W 84/06

(86) International application number:
PCT/KR2022/000415

(87) International publication number:
WO 2022/154418 (21.07.2022 Gazette 2022/29)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 14.01.2021 KR 20210005549

(71) Applicant: LG Electronics Inc.
Yeongdeungpo-gu
Seoul 07336 (KR)

(72) Inventors:
• SHIN, Seokmin
  Seoul 06772 (KR)
• PARK, Haewook
  Seoul 06772 (KR)
• KIM, Kijun
  Seoul 06772 (KR)
• KO, Hyunsoo
  Seoul 06772 (KR)
• YANG, Suckchel
  Seoul 06772 (KR)
• KIM, Seonwook
  Seoul 06772 (KR)

(74) Representative: Plasseraud IP
66, rue de la Chaussée d'Antin
75440 Paris Cedex 09 (FR)

(54) **METHOD AND DEVICE FOR PERFORMING RANDOM ACCESS PROCEDURE IN WIRELESS COMMUNICATION SYSTEM**

(57) Disclosed are a method and device for performing a random access procedure in a wireless communication system. A method for a terminal to perform a random access procedure according to an embodiment of the present disclosure comprises the steps of: receiving DCI, including a PD CCH order, from a base station in a downlink slot n; and transmitting a random access preamble to the base station in a specific RO, wherein the specific RO is determined on the basis of a specific offset value and a first time interval, the specific offset value is a timing offset value after an uplink slot n, and the first time interval may be a time interval starting from the downlink slot n.

FIG.11

RECEIVING DCI INCLUDING A PDCCH ORDER FROM A BASE STATION IN A DOWNLINK SLOT N — S1110

TRANSMITTING A RANDOM ACCESS PREAMBLE TO THE BASE STATION AT A SPECIFIC RO — S1120

EP 4 280 790 A1

**Description**

[Technical Field]

The present disclosure relates to a wireless communication system, and more particularly, to a method and apparatus for performing a random access procedure in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical object of the present disclosure is to provide a method and apparatus for performing a random access procedure in a wireless communication system.

In addition, an additional technical object of the present disclosure is to provide a method and apparatus for transmitting a physical random access channel by selecting an appropriate random access channel opportunity in a non-terrestrial network (NTN).

The technical objects to be achieved by the present disclosure are not limited to the above-described technical objects, and other technical objects which are not described herein will be clearly understood by those skilled in the pertinent art from the following description.

[Technical Solution]

As an embodiment of the present disclosure, a method performed by a user equipment (UE) to perform a random access procedure in a wireless communication system may include receiving downlink control information (DCI) including a physical downlink control channel (PDCCH) order from a base station in a downlink slot n; and transmitting a random access preamble to the base station at a specific random access channel occasion (RO), and the specific RO may be determined based on a specific offset value and a first time duration, and the specific offset value may be a timing offset value after an uplink slot n, and the first time duration may be a time duration starting from the downlink slot n.

As an embodiment of the present disclosure, a method performed by a base station to perform a random access procedure in a wireless communication system may include transmitting downlink control information (DCI) including a physical downlink control channel (PDCCH) order to a user equipment (UE) in a downlink slot n; and receiving a random access preamble from the UE at a specific random access channel occasion (RO), and the specific RO is determined based on a specific offset value and a first time duration, and the specific offset value is a timing offset value after an uplink slot n, and the first time duration is a time duration starting from the downlink slot n.

[Technical Effects]

According to an embodiment of the present disclosure, a method and apparatus for performing a random access procedure in a wireless communication system may be provided.

According to an embodiment of the present disclosure, a method and apparatus for transmitting a physical random access channel by selecting an appropriate random access channel opportunity in a non-terrestrial network may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is diagram for describing non-terrestrial network (NTN) supported by a wireless communication system to which the present disclosure may be applied.
FIGs 8, 9, and 10 are diagrams for describing a random access procedure in NTN supported by a wireless communication system to which the present disclosure can be applied.
FIG. 11 is a flowchart for describing a method of performing a random access procedure of a terminal according to an embodiment of the present disclosure.
FIG. 12 is a flowchart illustrating a method of performing a random access procedure by a base station according to an embodiment of the present disclosure.
FIG. 13 is a sequence diagram for describing a signaling procedure between a terminal and a network according to an embodiment of the present disclosure.
FIG. 14 illustrates a block configuration diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A (Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control

NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

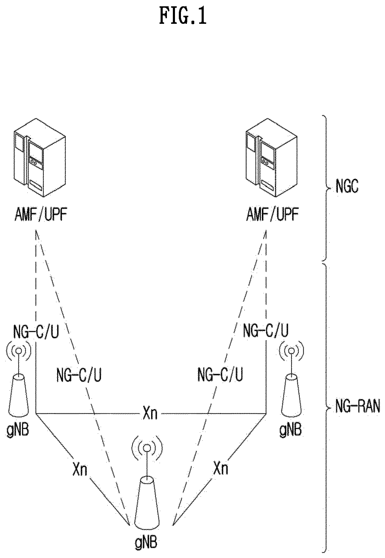

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

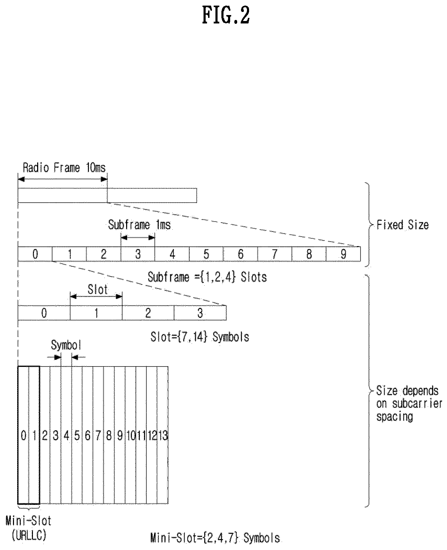

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f /100) \cdot Tc = 10ms$. Here, a radio frame is configured with 10 subframes having a duration of $T_{sf} = (\Delta f_{max} N_f /1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA, offset}) T_c$ than a corresponding downlink frame in a corresponding terminal starts. For a subcarrier spacing configuration $\mu$, slots are numbered in an increasing order of $n_s^{\mu} \in \{0, \ldots, N_{slot}^{subframe, \mu} - 1\}$ in a subframe and are numbered in an increasing order of $n_{s,f}^{\mu} \in \{0, \ldots, N_{slot}^{frame, \mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame, \mu}$) and the number of slots per subframe ($N_{slot}^{subframe, \mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

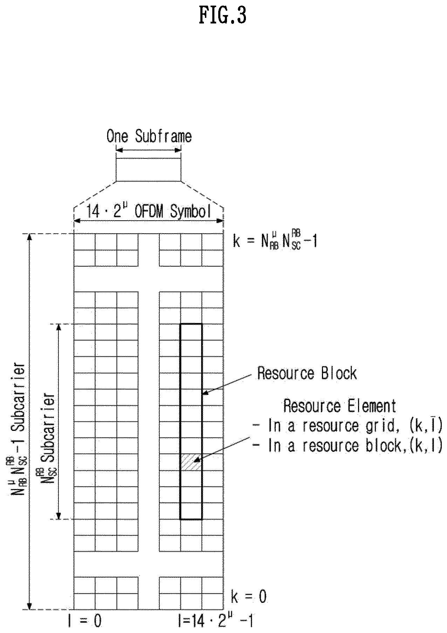

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}(\mu)$ and one or more resource grids configured with $N_{RB}^{\mu}N_{sc}^{RB}$ subcarriers. Here, $N_{RB}^{\mu} \le N_{RBmax,\ \mu}$. The $N_{RBmax,\ \mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A' . A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

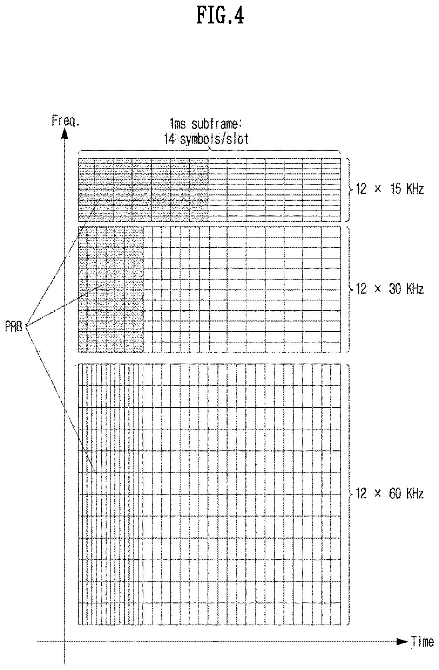

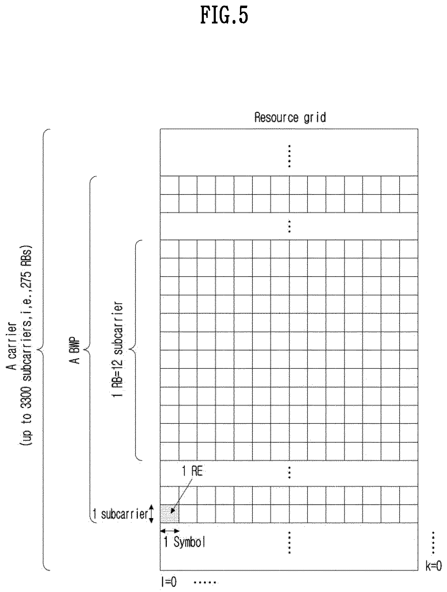

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

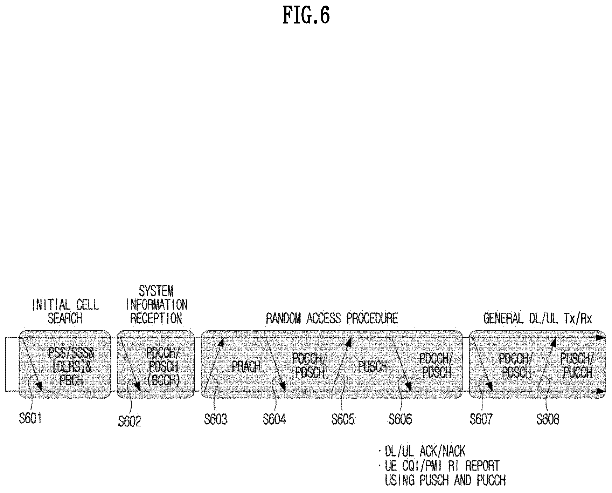

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

A wireless communication system supporting a non-terrestrial network (NTN)

NTN refers to a network or a segment of a network configured to use a radio resource (RF resource) in a satellite or unmanned aircraft system (UAS) platform. In order to secure wider coverage or to provide a wireless communication service in a place where it is not easy to install a wireless communication base station, the use of the NTN service is being considered.

Here, the NTN service refers to providing a wireless communication service to UEs by installing a base station on an artificial satellite(e.g., geostationary-orbit, low-orbit, medium-orbit satellite, etc.), an airplane, an unmanned aerial vehicle, a drone, etc. rather than on the ground. In the following description, the NTN service may include an NR NTN service and/or an LTE NTN service. A terrestrial network (TN) service refers to providing a wireless communication service to UEs by installing a base station on the ground.

A frequency band considered for the NTN service may be a 2 GHz band (S-band: 2-4 GHz) in the frequency range 1 (FR1) (e.g., 410 MHz to 7.125 GHz), and a downlink 20 GHz and uplink 30 GHz band (Ka-Band: 26.5~40GHz) in the frequency range 2(FR2). Additionally, the NTN service may be supported in a frequency band between 7.125 GHz and 24.25 GHz or in a frequency band of 52.6 GHz or higher.

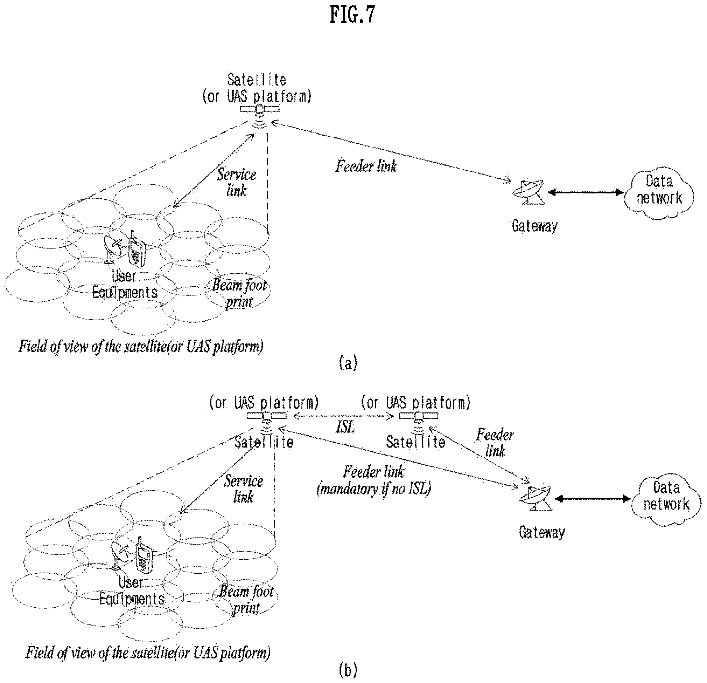

FIG. 7 is a diagram for describing NTN supported by a wireless communication system to which the present disclosure may be applied.

FIG. 7 (a) illustrates an NTN scenario based on a transparent payload (transparent payload) and FIG. 7 (b) illustrates an NTN scenario based on a regenerative payload (regenerative payload).

Here, the NTN scenario based on the transparent payload is a scenario in which an artificial satellite that has received a payload from a terrestrial base station transmits the corresponding payload to the UE, and the NTN scenario based on the regenerative payload refers to a scenario in which an artificial satellite is implemented as a base station (gNB).

NTNs are typically characterized by the following elements:

- one or more satellite-gateways for connecting NTN to public data networks:

A geostationary earth orbiting (GEO) satellite is fed by one or more satellite-gateways that are deployed in coverage targeted by the satellite (e.g., regional or continental coverage). A UE in a cell may be assumed to be served by only one satellite-gateway.

Non-GEO satellites may be successively served by one or more satellite-gateways. At this time, the wireless communication system guarantees service and feeder link continuity between the serving satellite-gateways for a time period sufficient to proceed with mobility anchoring and handover.

- A feeder link or radio link between the satellite-gateway and the satellite (or UAS platform)
- Service link or radio link between the UE and the satellite (or UAS platform)
- A satellite (or UAS platform) capable of implementing either a transparent or a regenerated (including on-board processing) payload.

Satellite (or UAS platform) generated beams generally generate a plurality of beams in a service area bounded by the field of view of the satellite (or UAS platform). The footprint of the beam is generally elliptical. The view of the satellite (or UAS platform) is determined by the onboard antenna diagram and the minimum elevation angle.

Transparent Payload: radio frequency filtering, frequency conversion and amplification. Accordingly, the waveform signal repeated by the payload is un-changed.

Regenerative payload: radio frequency filtering, frequency transformation and amplification as well as demodulation/decoding, switching and/or routing, coding/modulation. This is effectively equivalent to having all or part of the base station functions (e.g. gNB) on a satellite (or UAS platform).

- Inter-satellite links (ISL) for satellite groups. This requires a regenerative payload on the satellite. ISLs may operate at RF frequencies or optical bands.

- The UE is serviced by a satellite (or UAS platform) within the target service area.

Table 6 illustrates the types of satellites (or UAS platforms).

[Table 6]

| Platform | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |

(continued)

| Platform | Altitude range | Orbit | Typical beam footprint size |
|---|---|---|---|
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

Typically, GEO satellites and UAS are used to provide continental, regional or local services. And, a constellation of low earth orbiting (LEO) and medium earth orbiting (MEO) is used to provide services in both the northern and southern hemispheres. Alternatively, the corresponding constellation may provide global coverage including the polar region. In the future, appropriate orbital inclination, sufficient beams generated and inter-satellite links may be required. In addition, a highly elliptical orbiting (HEO) satellite system may be considered.

Hereinafter, a wireless communication system in NTN including the following six reference scenarios will be described.

- Circular orbiting and notional station keeping platforms.
- Highest RTD (Round Trip Delay) constraint
- Highest Doppler constraint
- A transparent and a regenerative payload
- One ISL case and one without ISL case. Regenerative payload for inter-satellite links

The six reference scenarios are considered in Tables 7 and 8.

[Table 7]

| | Transparent satellite | Regenerative satellite |
|---|---|---|
| GEO based non-terrestrial access network | Scenario A | Scenario B |
| LEO based non-terrestrial access network: steerable beams | Scenario C1 | Scenario D1 |
| LEO based non-terrestrial access network: the beams move with the satellite | Scenario C2 | Scenario D2 |

[Table 8]

| Scenarios | GEO based non-terrestrial access network (Scenario A and B) | LEO based non-terrestrial access network (Scenario C & D) |
|---|---|---|
| Orbit type | notional station keeping position fixed in terms of elevation/azimuth with respect to a given earth point | circular orbiting around the earth |
| Altitude | 35,786 km | 600 km 1,200 km |
| Spectrum (service link) | In FR1 (e.g., 2 GHz) IN FR2 (e.g., DL 20 GHz, UL 30 GHz) | |
| Max channel bandwidth capability (service link) | 30 MHz in FR1 1 GHz in FR2 | |

(continued)

| Scenarios | GEO based non-terrestrial access network (Scenario A and B) | LEO based non-terrestrial access network (Scenario C & D) |
|---|---|---|
| Payload | Scenario A : Transparent (including radio frequency function only)<br><br>Scenario B: regenerative (including all or part of RAN functions) | Scenario C: Transparent (including radio frequency function only)<br>Scenario D: Regenerative (including all or part of RAN functions) |
| Inter-Satellite link | No | Scenario C: No<br>Scenario D: Yes/No (Both cases are possible.) |
| Earth-fixed beams | Yes | Scenario C1: Yes (steerable beams), see note 1<br>Scenario C2: No (the beams move with the satellite)<br>Scenario D 1: Yes (steerable beams), see note 1<br>Scenario D 2: No (the beams move with the satellite) |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |
| Max distance between satellite and user equipment at min elevation angle | 40,581 km | 1,932 km (600 km altitude)<br><br>3,131 km (1,200 km altitude) |
| Max Round Trip Delay (propagation delay only) | Scenario A: 541.46 ms (service and feeder links)<br><br>Scenario B: 270.73 ms (service link only) | Scenario C: (transparent payload: service and feeder links)<br>25.77 ms (600km)<br>41.77 ms (1200km)<br>Scenario D: (regenerative payload: service link only)<br>12.89 ms (600km)<br>20.89 ms (1200km) |
| Max differential delay within a cell (Note 6) | 10.3 ms | 3.12 ms and 3.18 ms for respectively 600km and 1200km |
| Max Doppler shift (earth fixed user equipment) | 0.93 ppm | 24 ppm (600km)<br>21ppm(1200km) |
| Max Doppler shift variation (earth fixed user equipment) | 0.000 045 ppm/s | 0.27ppm/s (600km)<br>0.13ppm/s(1200km) |
| User equipment motion on the earth | 1200 km/h (e.g. aircraft) | 500 km/h (e.g. high speed train)<br>Possibly 1200 km/h (e.g. aircraft) |

(continued)

| Scenarios | GEO based non-terrestrial access network (Scenario A and B) | LEO based non-terrestrial access network (Scenario C & D) |
|---|---|---|
| User equipment antenna types | Omnidirectional antenna (linear polarisation), assuming 0 dBi Directive antenna (up to 60 cm equivalent aperture diameter in circular polarisation) | |
| User equipment Tx power | Omnidirectional antenna: UE power class 3 with up to 200 mW Directive antenna: up to 20 W | |
| User equipment Noise figure | Omnidirectional antenna: 7 dB Directive antenna: 1.2 dB | |
| Service link | 3GPP defined New Radio | |
| Feeder link | 3GPP or non-3GPP defined Radio interface | 3GPP or non-3GPP defined Radio interface |

NOTE 1: Each satellite may have the capability to steer beams towards fixed points on earth using beamforming techniques. This is applicable for a period of time corresponding to the visibility time of the satellite. NOTE 2: Max delay variation within a beam (earth fixed user equipment) is calculated based on Min Elevation angle for both gateway and user equipment.

NOTE 3: Max differential delay within a beam is calculated based on Max beam foot print diameter at nadir

NOTE 4: Speed of light used for delay calculation is 299792458 m/s.

NOTE 5: The Maximum beam foot print size for GEO is based on current state of the art GEO High Throughput systems, assuming either spot beams at the edge of coverage (low elevation).

NOTE 6: The maximum differential delay at the cell level is calculated by considering the delay at the beam level for the largest beam size. When the beam size is small or medium, the cell may contain more than one beam. However, the cumulative differential delay of all beams in the cell does not exceed the maximum differential delay at the cell level in Table 8.

NTN-related descriptions in this disclosure may be applied to NTN GEO scenarios and all NGSO (non-geostationary orbit) scenarios with circular orbits with an altitude of 600 km or more.

In addition, the above-described contents (NR frame structure, NTN, etc.) may be applied in combination with methods to be described later, and may be supplemented to clarify the technical characteristics of the method described in the present disclosure.

A method for configuring timing advance (TA) value in NTN

In the TN, since the UE moves within a cell, even if the distance between the base station and the UE changes, the PRACH preamble transmitted by the UE may be transmitted to the base station within the time duration of a specific RACH occasion (RO).

In addition, the TA value for the UE to transmit an uplink signal/channel may include an initial TA value and a TA offset value. Here, the initial TA value and the TA offset value may be indicated by the base station as a TA value expressible in the cell coverage range of the base station.

As another example, when the base station indicates a PDCCH order through DCI, the UE may transmit a PRACH preamble to the base station. The UE may transmit an uplink signal/channel to the base station by using the TA value (i.e., the initial TA value) indicated through the response message (random access response, RAR) to the preamble received from the base station.

In NTN, the distance between the satellite and the UE is changed due to the movement of the satellite regardless of the movement of the UE. To overcome this, the UE may determine the location of the terminal through a global navigation satellite system (GNSS), and calculate a UE-specific TA, which is a round trip delay (RTD) between the UE and the satellite, based on orbit information of the satellite instructed by the base station.

Here, the UE-specific TA may be configured such that, when the PRACH preamble is transmitted from the RO selected by the UE, the satellite (or the base station (gNB)) may receive the PRACH preamble within the time duration of the RO.

And, when only the UE-specific TA is applied when the PRACH preamble is transmitted from the RO selected by the UE, the PRACH preamble may be transmitted to the satellite (or gNB) with a delay from the reference time of the RO. In this case, the initial TA value indicated by the RAR received from the base station may indicate the delayed value.

Additionally, a common TA may mean an RTD between a gNB (or a reference point) on the ground and a satellite. Here, the reference point may mean a place where downlink and uplink frame boundaries coincide. In addition, the common TA may be defined as indicated by the base station to the UE. If the reference point is in the satellite, the common TA may not be indicated, and if the reference point is in the gNB on the ground, the common TA may be used to compensate for the RTD between the gNB and the satellite.

Additionally, in NTN, the TA value before transmission of message (message, Msg) 1 (e.g., PRACH preamble)/Msg A (e.g., PRACH preamble and PUSCH) may be configured to UE-specific TA and common TA (if provided). Here, the UE-specific TA may be an RTD between the UE and the satellite calculated by the UE itself as described above.

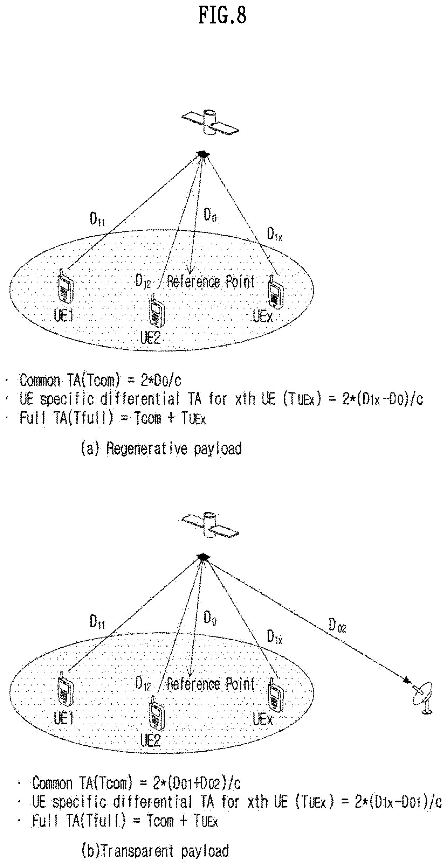

As an embodiment of the present disclosure, FIG. 8 illustrates a method of calculating a TA value in a wireless communication system supporting NTN.

FIG. 8(a) illustrates a regenerative payload based NTN scenario. The common TA (Tcom) (common to all UEs) may be calculated as 2D0(distance between the satellite and the reference signal)/c, and the UE-specific differential TA (TUEx) for the x-th UE (UEx) may be calculated as 2(D1x-D0)/c. The total TA (Tfull) may be calculated as 'Tcom + TUEx'. Here, D1x may mean a distance between the satellite and UEx and c may represent the speed of light.

FIG. 8(b) illustrates a transparent payload based NTN scenario. The common TA (Tcom) (common to all UEs) may be calculated as 2(D01+D02)/c, and the UE-specific differential TA (TUEx) for the x-th UE (UEx) may be calculated as 2(D1x-D0)/c. The total TA (Tfull) may be calculated as 'Tcom + TUEx'. Here, D01 may mean a distance between a satellite and a reference point, and D02 may mean a distance between a satellite and a base station located on the ground.

PDCCH order-based RACH procedure

When a random access procedure is initiated by a PDCCH order, (if requested by a higher layer) the UE transmits the PRACH at a PRACH occasion (i.e., RO) selected so that the interval between the last symbol of PDCCH order reception and the first symbol of PRACH transmission is equal to or greater than the minimum gap(e.g., $N_{T,2}+\Delta_{BWPswitching}+\Delta_{delay}+T_{switching}$ msec).

Here, assuming that $\mu$ is the smallest SCS configuration between the subcarrier spacing (SCS) configuration of the PDCCH order and the SCS configuration of the PRACH transmission, $T_{T,2}$ means a time duration of N_2 symbols corresponding to a PUSCH preparation time for UE processing capability 1. For example, in the case of PRACH transmission using a 1.25 kHz or 5 kHz SCS, the UE may determine N_2 assuming a specific SCS configuration (e.g., $\mu$=0).

In addition, $\Delta_{BWPswitching}$ may be configured to 0 when the uplink BWP is not changed, and may be configured to a predefined value in other cases. $\Delta_{delay}$ may be defined as 0.5 msec when FR (frequency range) 1 and 0.25 msec when FR 2. $T_{switch}$ may be a predefined switching gap duration.

From the point of view of the UE, the minimum gap ($N_{T,2}+\Delta_{BWPswitching}+\Delta_{delay}+T_{switching}$ msec) between the last symbol of PDCCH order reception and the first symbol of PRACH transmission is predefined, but the RO to be selected by the UE is not defined. That is, which RO to select among ROs existing after the minimum gap from the last symbol of PDCCH order reception may vary depending on the UE implementation.

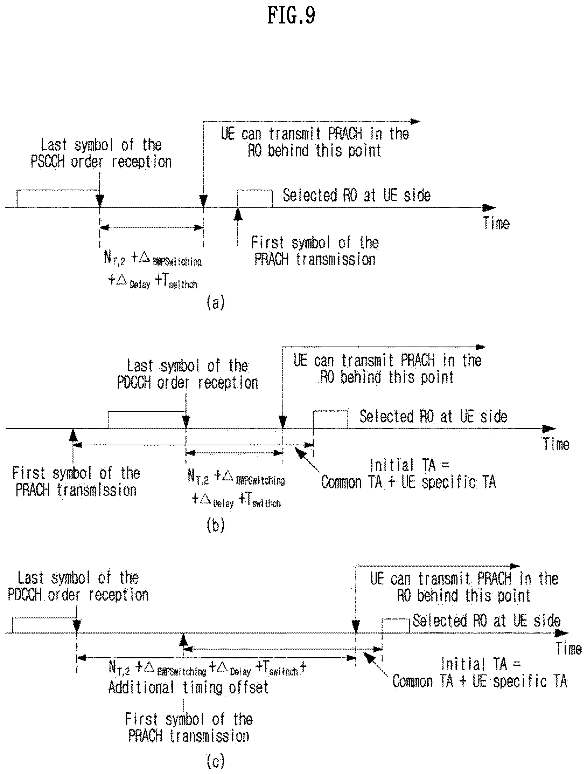

As shown in (a) of FIG. 9, when the base station transmits a PDCCH order DCI format (i.e., a DCI format including the PDCCH order) to the UE, the UE may select an appropriate RO among ROs existing after the minimum gap from the last symbol of PDCCH order reception (i.e., after a time point away from the last symbol of PDCCH order reception by the minimum gap). Here, the DCI format may include information such as a preamble index and RO to be transmitted by the UE. The UE may transmit PRACH (i.e., PRACH preamble) in the selected RO.

The intention of defining the minimum gap between the last symbol of PDCCH order reception and the first symbol of PRACH transmission may be used to define a minimum gap between the last symbol of the PDCCH order DCI format received by the UE and the first symbol of the RO selected by the UE to transmit the PRACH.

In the TN, since the initial TA value configured/applied when the UE transmits the PRACH is 0, the time point of the first symbol of the PRACH transmission and the first symbol of the RO selected by the UE are the same from the point of view of the UE. Thus, the above intention may be satisfied in TN.

However, in NTN, since the RTD from the UE to the base station (gNB) is very large, an initial TA value configured during PRACH transmission may be the sum of a non-zero UE-specific TA and a common TA (if provided). Therefore, when the above-described definition/operation is reflected in the NTN, as shown in (b) of FIG. 9, a problem may arise in that the UE must transmit the PRACH before receiving the PDCCH.

In order to solve the above problem, as shown in (c) of FIG. 9, in an embodiment of the present disclosure, an appropriate timing offset (e.g., 'common TA + UE-specific TA') value may be added to the minimum gap. An appropriate timing offset value will be described in detail in a later section.

In describing this disclosure, if defined as adding the appropriate timing offset value (for NTN) to the minimum gap, an interval subject to the minimum gap may be 'an interval between the last symbol of PDCCH order reception from the UE's point of view and the first symbol of the RO selected by the UE to transmit the PRACH', rather than 'an interval between the last symbol of PDCCH order reception and the first symbol of PRACH transmission from the point of view of the UE'. This is because, as described above, the first symbol of PRACH transmission in the NTN is ahead of the first symbol of the RO selected by the UE by the initial TA ('common TA + UE specific TA').

Embodiment 1

The base station may indicate the number of association pattern periods that the UE skips (or the UE may ignore and skip) as an appropriate timing offset value to be added to the minimum gap through the DCI format.

Here, the association period may mean the minimum number of PRACH configuration periods including sufficient PRACH opportunities so that all SS/PBCH beams may be mapped to at least one PRACH opportunity set. PRACH configuration period and association period may be defined as shown in Table 9.

[Table 9]

| PRACH configuration period (msec) | Association period |
|---|---|
| 10 | {1,2,4,8,16} PRACH configuration period |
| 20 | {1,2,4,8} PRACH configuration period |
| 40 | {1,2,4} PRACH configuration period |
| 80 | {1,2} PRACH configuration period |
| 160 | {1} PRACH configuration period |

An association pattern period may include one or more association periods. The association pattern period may be determined such that the pattern between the PRACH opportunity and the SS/PBCH block index is repeated at most every 160 msec.

As an embodiment of the present disclosure, it is assumed that the base station indicates the number of associated pattern periods to be skipped by the terminal through a PDCCH order DCI format (or group common (GC) PDCCH, etc.). The number of associated pattern periods to be skipped by the UE may be indicated by a k (k is a natural number)-bits field among fields of the DCI format, and a value (i.e., the number of associated pattern periods) that can be configured for each state of the k-bits field may be configured in advance by SIB or RRC signaling of the base station.

For example, when k is 2, the number of four associated pattern periods can be configured to 1, 2, 4, and 8 for each of the four states that can be implemented as the k-bits field.

As another example, when the base station does not configure/indicate the number of associated pattern periods corresponding to each state of the k-bits field through system information block (SIB) or RRC signaling, a default setting value related to the associated pattern period may be defined between the UE and the base station.

In addition, the base station may calculate the entire RTD including both the service link (link between base station and satellite) and the feeder link (link between satellite and UE), and the SSB and RO mapping relationship, and appropriately set the configuration value for the association pattern period to the UE.

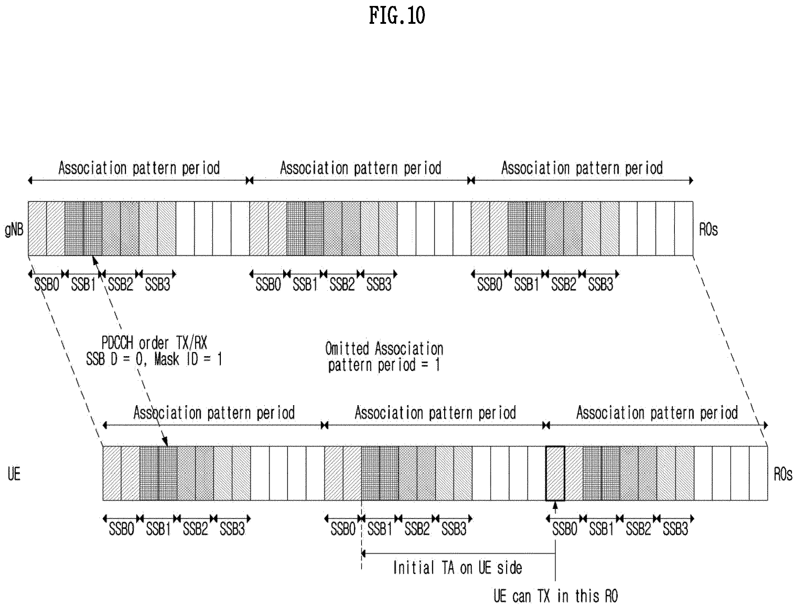

As an embodiment of the present disclosure, it is assumed that a UE receives the number (N) of related pattern fields to be skipped by the UE. The UE may be configured to skip N associated pattern periods that exist after receiving the PDCCH order DCI format, and transmit the PRACH preamble (or Msg. A PRACH) by selecting an appropriate RO (e.g., RO that matches the value configured by the base station) among ROs that exist after the start of the N+1 th associated pattern field. FIG. 10 illustrates an operation of a UE when N is 1.

Here, the TA value to be used by the UE may be one of a TA value (i.e., 'UE-specific TA + common TA (if provided)') obtained and used when the UE performs initial access or a TA value most recently updated before receiving the PDCCH order DCI format.

For example, when 2-step RACH is performed, the UE may transmit the Msg. A PRACH preamble in the selected RO and then select the PO associated with the RO and transmit the Msg. A PUSCH.

In the case of Embodiment 1, since the number of associated pattern fields to be skipped by the UE is directly indicated in the DCI, DCI overhead may be minimized compared to the case where the actual TA is indicated to the UE.

Embodiment 2

The base station may indicate, through SIB or RRC signaling (or MAC-CE), the number of associated pattern periods that the UE skips (or the UE may ignore) as an appropriate timing offset value to be added to the minimum gap.

Alternatively, instead of the base station directly indicating/configuring the number of associated pattern periods (or omitted association pattern period number) to be skipped by the UE, the number of omitted associated pattern periods may be defined/promised in advance and applied according to the K-offset value. Here, the K-offset value may be a predefined value used by the UE to select an available PRACH occasion.

When the UE receives the number (N) of associated pattern fields to be skipped, upon receiving the PDCCH order DCI format, the UE may be configured to skip N associated pattern fields that exist after the PDCCH order DCI format is received, and transmit the PRACH preamble (or Msg. A PRACH) by selecting an appropriate RO (e.g., RO that matches the value set by the base station) among ROs that exist after the start of the N+1 th associated pattern field.

Here, the TA value (i.e., 'UE-specific TA + common TA (if provided)') to be used by the UE may be one of a TA value obtained and used by the UE when performing initial access or a TA value most recently updated before receiving the PDCCH order DCI format.

For example, when 2-step RACH is performed, the UE may transmit the Msg. A PRACH preamble in the selected RO and then select the PO associated with the RO and transmit the Msg. A PUSCH.

In the case of embodiment 2, since additional signaling is not required for the PDCCH order DCI format, overhead according to the signaling may be reduced.

Embodiment 3

The base station may not indicate a specific timing offset value for the UE and may add a separate operation for the UE.

The base station may indicate the PDCCH order-based RACH procedure to the UE through the DCI format. Upon receiving the PDCCH order DCI format, the UE may use a TA value (i.e., 'UE-specific TA + common TA (if provided)') acquired and used during initial access or a TA value most recently updated before receiving the PDCCH order DCI format. The UE may add the used TA value when the PDCCH order DCI format is received. And, the UE may be configured to select an appropriate RO (e.g., an RO that matches the value configured by the base station) among the ROs that exist after the added time point and transmit the PRACH preamble (i.e., Msg. 1/Msg. A).

As another example, the UE may not select ROs of the associated pattern period corresponding to the added time point, and may be configured to transmit the PRACH preamble (i.e., Msg. 1/Msg. A) by selecting an RO suitable for a value configured by the base station among ROs existing after the start of the next association pattern period. This is to configure the UE not to transmit the preamble immediately after receiving the PDCCH order DCI format.

In the case of embodiment 3, additional signaling is not required for the PDCCH order DCI format to add a specific timing offset value, and since the base station does not have to report a UE-specific TA, related overhead may be reduced.

Embodiment 4

A base station may indicate a timing window to a UE through a PDCCH order DCI format. Specifically, the base station may indicate the size (i.e., duration) of the timing window and a starting offset value from the DCI reception point to the UE.

The UE may be configured to transmit the PRACH preamble (i.e., Msg. 1/Msg. A) by selecting an RO that satisfies all conditions among ROs within the timing window using the indicated timing window size and start offset value.

The conditions are 1) an RO existing equal to or farther than the TA value to be used by the UE from the time of receiving the PDCCH order DCI format, and 2) an RO that meets the value set by the base station. Here, the TA value to be used by the UE may be a TA value obtained during initial access or a TA value most recently updated before receiving a PDCCH order DCI format.

When the timing window size is large, the base station may not be able to accurately know the RO to transmit the PRACH preamble selected by the terminal. However, when the timing window size is appropriately set/instructed, a specific RO may be targeted.

Embodiment 5

An appropriate timing offset value to be added to the minimum gap may be configured to a value obtained by adding an additional timing offset value to an initial TA ('UE-specific TA + common TA') value to be configured by the UE or a common TA value.

Since the base station may not accurately know the most recent UE-specific TA value calculated by the UE, an additional timing offset value may be configured in consideration of the maximum error range of the UE-specific TA. The additional timing offset value may be predefined or configured by a base station.

For example, the minimum PDCCH-to-PRACH delay (i.e., the delay between the time of receiving the PDCCH and the time of transmitting the PRACH) for NTN may be 'minimum gap + first TA of NTN + additional timing offset#1' or 'minimum gap + common TA of NTN + additional timing offset#2'. Here, the additional timing offset #1 may be indicated by a value including the maximum error range of the UE-specific TA calculated by the UE, and the additional timing offset #2 may be indicated by a value including a UE-specific TA value that the UE may calculate and configure.

The UE receiving the PDCCH order DCI format may be configured to transmit the PRACH preamble (or Msg. A preamble) by selecting an appropriate RO (e.g., RO that matches the value configured by the base station) among ROs existing after a time point away from the time point at which the PDCCH order DCI format is received by the minimum PDCCH-to-PRACH delay value for the indicated NTN.

Here, the TA value to be used by the UE may be one of a TA value (i.e., 'UE-specific TA + common TA (if provided) ') obtained and used by the UE when performing initial access or a TA value most recently updated before receiving the PDCCH order DCI format.

For example, when a 2-step RACH is performed, after transmitting the Msg. A PRACH preamble in the selected RO, the UE may select a PO associated with the RO and transmit Msg. A PUSCH.

Additionally, the timing offset (i.e., association pattern period, etc.) from the uplink perspective mentioned in the above embodiments may be indicated as a timing offset value (i.e., a certain number of downlink slots, etc.) from the downlink perspective or may be indicated as an actual time (e.g., 10 ms).

Also, information indicated by the base station may be invalid from the viewpoint of the UE. For example, the base station may determine that an appropriate RO may be selected when the UE skips by a specific associated pattern period value, and may indicate the UE with the specific associated pattern period value. However, the specific association pattern field period value indicated by the base station may not cover a value obtained by adding the UE-specific TA value actually calculated by the UE and the common TA (if provided) value. That is, a specific associated pattern field period value indicated by the base station may not be sufficient for the UE to select an appropriate RO.

Therefore, in order to solve such a problem, when an associated pattern period to be skipped is indicated by the base station, the UE may first determine whether the duration of the associated pattern period is greater than or equal to 'common TA (if provided) + UE-specific TA value'.

For example, when the interval corresponding to the association pattern period is greater than (or greater than or equal to) 'common TA (if provided) + UE-specific TA value', the UE may be configured to transmit the PRACH preamble by selecting a (configured) RO that exists after the information (i.e., a period equal to the associated pattern period) indicated by the base station (i.e., according to Embodiment 1 or Embodiment 2).

As another example, when the interval corresponding to the association pattern period is smaller than (or equal to or smaller than) 'common TA (if provided) + UE-specific TA value', the UE may be configured to (i.e., configured to follow Embodiment 3) transmit the PRACH preamble by ignoring the information indicated by the base station and selecting an RO existing after a distance of 'Common TA (if provided) + UE-specific TA value' from the PDCCH order DCI format reception point. In this case, the TA value applied to the UE may be 'common TA (if provided) + UE-specific TA', or may be a TA value most recently updated before receiving the PDCCH order DCI format.

Additionally, when the common TA value (or K-offset value) is beam specific, a common TA value (or K-offset value) suitable for the beam direction of the SSB corresponding to the RO indicated by the base station may be configured to be used for the total TA value to be configured by the UE.

Additionally, when the common TA value (or K-offset value) is beam specific and the base station indicates contention based random access (CBRA) through the PDCCH order DCI format, since the UE does not know which RO to select, the timing offset (e.g., association pattern period) configured by the base station may be configured (as indicated) based on the largest value among each common TA value (or each K-offset value).

The above-described embodiments may be included as one of implementation methods of the present disclosure. In addition, the above-described embodiments may be implemented independently, but may also be implemented in a combination (or merged) form of some embodiments. Rules may be defined so that information on whether the above embodiments are applied (or information on the rules of the above embodiments) is informed by the base station to the UE through a predefined signal (e.g., a physical layer signal or a higher layer signal). Here, the higher layer may include, for example, one or more of functional layers such as MAC, RLC, PDCP, RRC, and SDAP. In addition, embodiments of the present disclosure may be applied to a technique for estimating an accurate location of the UE.

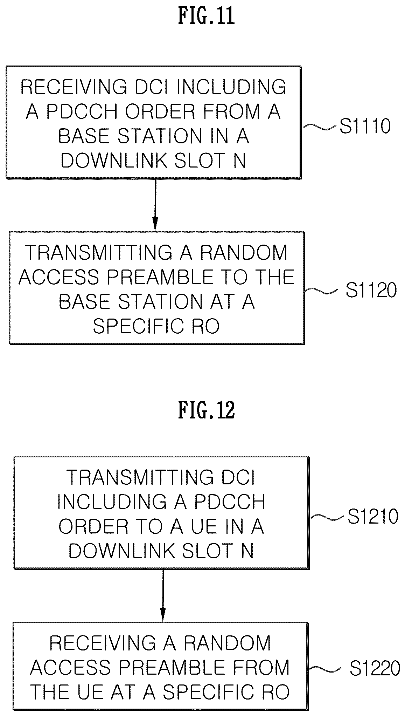

FIG. 11 is a flowchart for describing a method of performing a random access procedure of a terminal according to an embodiment of the present disclosure.

In describing the present disclosure, the fact that the specific time interval starts after uplink/downlink slot n or from uplink/downlink slot n may mean a boundary between uplink/downlink slot n and slot n+1, an end point of uplink/downlink slot n, or after or starting from the last symbol of uplink/downlink slot n.

The UE may receive a physical downlink control channel (PDCCH) order including downlink control information (DCI) from the base station in downlink slot n (S1110).

The UE may transmit a random access preamble to the base station at a specific random access channel occasion (RO) (S1120).

Here, a specific RO may be determined based on a specific offset value and a first time duration.

A specific offset value may mean a timing offset value after uplink slot n. The first time duration may be a time duration starting from downlink slot n.

For example, the first time duration means a time duration starting from downlink slot n and lasting as much as the sum of the time corresponding to the physical uplink shared channel (PUSH) preparation time (i.e., $N_{T,2}$), the bandwidth part (BWP) switching delay time (i.e., $\Delta_{BWPswitching}$), the predefined delay time (i.e., $\Delta_{delay}$) according to the frequency range (FR), and the switching gap time (i.e., $T_{switch}$). That is, the first time duration may be a time duration corresponding to the above-described minimum gap.

For example, the specific offset value may have a value based on the number of association pattern periods. Here, the value based on the number of associated pattern periods may mean a value (e.g., time that can last as long as the number of association pattern periods, etc.) corresponding to the number of associated pattern periods that the UE can ignore (or skip) .

Here, the value based on the number of association pattern periods may be included in one or more of the DCI, RRC (radio resource control) message, or MAC-CE (medium access control-control element) and provided from the base station to the UE.

As another example, the specific offset value may be a sum of a timing advance (TA) and an additional offset value.

Here, TA means a time duration calculated to compensate for a delay between uplink slot n and downlink slot n.

For example, the TA may be a UE-specific TA that is an round-trip delay (RTD) between a UE and a non-terrestrial communication device, a common TA that is an RTD between a base station and a non-terrestrial communication device, or a sum of a UE-specific TA and a common TA. In this case, the non-terrestrial communication device may include a satellite, a drone, an unmanned airship, an airplane, etc. as a communication device (e.g., a base station) not located on the ground.

In addition, the TA may be obtained when performing an initial access procedure, but may be additionally updated. That is, the TA may mean a TA obtained during an initial access procedure or a TA most recently updated before receiving the DCI.

And, the additional offset value may be predefined or configured by the base station. For example, the additional offset value may include the maximum error range of the UE-specific TA calculated by the UE when the TA is the sum of the UE-specific TA and the common TA. As another example, the additional offset value may include a UE-specific TA value that can be calculated and configured by the UE when the TA is a common TA.

The UE may transmit a random access preamble to the base station by selecting a specific RO among ROs existing after the specific offset value and the first time duration. Specifically, the specific RO may be an RO determined from among next available ROs after a later time point among after a specific offset value from uplink slot n and after the first time duration from downlink slot n.

As another example, the UE may receive DCI including a specific offset value (or starting offset) and a timing window size for random access preamble transmission from the base station. In this case, the specific RO may mean an RO that satisfies a specific condition among ROs existing within a timing window size from a time point after a specific offset value from uplink slot n.

Here, it means the next available RO after the time point after the TA from the downlink slot n (i.e., the time point at which the DCI is received) satisfying the specific condition.

As another example, the specific RO may be selected from at least one RO that exist after the sum of the specific offset value and the second time duration from the uplink slot n. Here, the second time duration may refer to a time duration between a time point determined by the first time duration and a time point determined by the specific offset value.

As another example, the specific RO may refer to an RO determined from among next available ROs after a later time point between a specific offset from uplink slot n and a first time duration from downlink slot n.

In describing the present disclosure, a wireless communication system may refer to a system supporting a non-terrestrial network NTN system. However, this is only one embodiment, and the present disclosure may be extended and applied to a terrestrial network system.

FIG. 12 is a flowchart illustrating a method of performing a random access procedure by a base station according to an embodiment of the present disclosure.

The base station may transmit a PDCCH order including DCI to the UE in downlink slot n (S1210).

The base station may receive a random access preamble from the UE in a specific RO (S1220). Here, the specific RO may be determined based on the specific offset value and the first time duration. Since the specific RO, the specific offset value, and the first time duration have been specifically described with reference to FIG. 11, duplicate descriptions will be omitted.

For example, the base station may transmit a value corresponding to the number of associated pattern periods that the UE can ignore as a specific offset value to the UE through one or more of the DCI, RRC message, or MAC-CE.

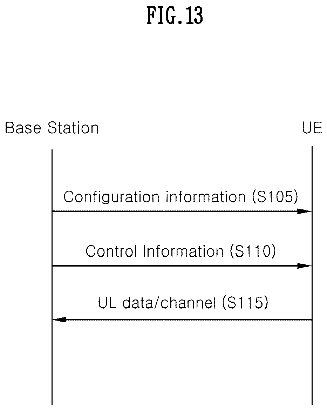

FIG. 13 is a diagram for describing a signaling procedure of a network side and a terminal according to the present disclosure.

FIG. 13 illustrates an example of signaling between a network side and a UE in a situation where one or more physical channels/signals to which the above-described Embodiments (e.g., Embodiment 1, Embodiment 2, Embodiment 3, Embodiment 4, Embodiment 5 or a combination of one or more of the detailed Embodiments thereof) of the present disclosure may be applied are NTN transmitted.

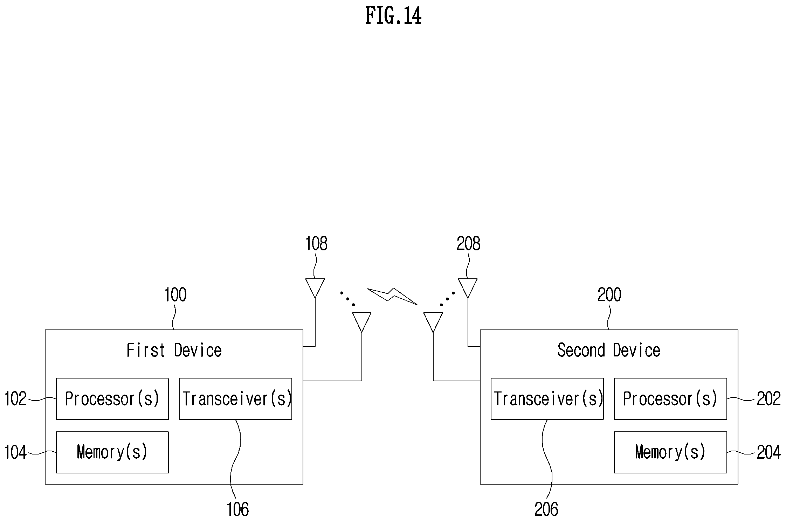

Here, the UE/network side is exemplary and may be applied to various devices as described with reference to FIG. 14. FIG. 13 is for convenience of description and does not limit the scope of the present disclosure. In addition, some step(s) shown in FIG. 13 may be omitted depending on circumstances and/or configurations. In addition, in the operation of the network side/UE of FIG. 13, the above-described random access procedure operation or the like may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, although described based on "TRP" in the following description, as described above, "TRP" may be replaced with expressions of a panel, an antenna array, a cell (e.g., a macro cell/small cell/pico cell, etc.), a TP (transmission point), a base station (e.g., gNB, etc.), and the like. As described above, the TRP may be classified according to information (e.g., CORESET index, ID) on the CORESET group (or CORESET pool). As an example, when one UE is configured to perform transmission/reception with a plurality of TRPs (or cells), this may mean that a plurality of CORESET groups (or CORESET pools) are configured for one UE. The configuration of such a CORESET group (or CORESET pool) may be performed through higher layer signaling (e.g., RRC signaling, etc.).

In addition, the base station may mean a generic term for an object that transmits and receives data with the UE. For example, the base station may be a concept including one or more TPs (Transmission Points), one or more TRPs (Transmission and Reception Points), and the like. In addition, the TP and/or TRP may include a panel of a base station, a transmission and reception unit, and the like.

The UE may receive configuration information from the base station (S105). For example, the configuration information may include NTN-related configuration information / configuration information (e.g., PUCCH-config/ PUSCH-config) / HARQ process-related configurations (e.g., whether to enable/disable HARQ feedback/number of HARQ processes, etc.) / CSI reporting-related configurations (e.g., CSI report config / CSI report quantity / CSI-RS resource config, etc.) for uplink transmission/reception described in the above-described embodiment (e.g., Embodiment 1, Embodiment 2, Embodiment 3, Embodiment 4, Embodiment 5 or a combination of one or more of the detailed embodiments thereof). For example, the configuration information may be transmitted through higher layer (e.g., RRC or MAC CE) signaling.

For example, the operation in which the UE (100 or 200 of FIG. 14) receives the configuration information from the base station (200 or 100 of FIG. 14) in step S105 described above can be implemented by the device of FIG. 14 to be described below. For example, referring to FIG. 14, one or more processors 102 may control one or more transceivers 106 and/or one or more memories 104 to receive the configuration information, and one or more transceivers 106 may receive the configuration information from a network side.

The UE may receive control information from the base station (S110). For example, the UE may receive DCI including the PDCCH order from the base station. For example, the DCI may have a value based on the number of association pattern periods as a specific offset value. As another example, DCI may include a specific offset value and a timing window size for random access preamble transmission.

For example, the above-described operation of transmitting the DCI from the UE (100 or 200 in FIG. 14) to the base station (200 or 100 in FIG. 14) in step S110 can be implemented by the device of FIG. 14 to be described below. For example, referring to FIG. 14, one or more processors 102 may control one or more transceivers 106 and/or one or more memories 104 to transmit the control information, and one or more transceivers 106 may transmit the control information to a base station.

The UE may transmit uplink data/channel to the base station (S115). For example, the terminal may transmit uplink data/channel to the base station based on the above-described embodiment (e.g., Embodiment 1, Embodiment 2, Embodiment 3, Embodiment 4, Embodiment 5 or a combination of one or more of the detailed embodiments thereof). For example, the UE may transmit a random access preamble to the base station in a specific RO.

For example, an operation in which the UE (100 or 200 in FIG. 14) transmits uplink data/channel in step S115 described above may be implemented by the device of FIG. 14 below. For example, referring to FIG. 14 , one or more processors 102 may control one or more memories 104 to transmit the uplink data/channel.

As mentioned above, the signaling and embodiments (e.g., Embodiment 1, Embodiment 2, Embodiment 3, Embodiment 4, Embodiment 5 or a combination of one or more of the detailed Embodiments thereof) of the base station/UE described above may be implemented by an apparatus to be described with reference to FIG. 14. For example, the base station may correspond to the first device 100 and the UE may correspond to the second device 200, and vice versa may also be considered according to circumstances.

For example, the above-described signaling and operation (e.g., Embodiment 1, Embodiment 2, Embodiment 3, Embodiment 4, Embodiment 5 or a combination of one or more of the detailed Embodiments thereof) of the base station / UE may be processed by one or more processors (e.g., 102, 202) of FIG. 14, and the above-described signaling and operation (e.g., Embodiment 1, Embodiment 2, Embodiment 3, Embodiment 4, Embodiment 5 or a combination of one or more of the detailed Embodiments thereof) of the base station/UE may be stored in a memory (e.g., one or more memories (e.g., 104, 204 of FIG. 14) in the form of a command/program (e.g., instruction, executable code) for driving at least one processor of FIG. 14.

General Device to which the Present Disclosure may be applied

Fig. 14 illustrates a block diagram of a wireless communication apparatus according to an embodiment of the present disclosure.

Referring to FIG. 14, the first device 100 and the second device 200 may transmit/receive radio signals through various radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat S1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) to perform a random access procedure in a wireless communication system, the method comprising:

   receiving downlink control information (DCI) including a physical downlink control channel (PDCCH) order from a base station in a downlink slot n; and
   transmitting a random access preamble to the base station at a specific random access channel occasion (RO), wherein the specific RO is determined based on a specific offset value and a first time duration,
   wherein the specific offset value is a timing offset value after an uplink slot n, and
   wherein the first time duration is a time duration starting from the downlink slot n.

2. The method of claim 1, wherein:
   the first time duration, starting from the downlink slot n, is a time duration lasting as much as a sum of a time corresponding to a physical uplink shared channel (PUSCH) preparation time, a bandwidth part (BWP) switching delay time, a predefined delay time according to a frequency range (FR), and a switching gap time.

3. The method of claim 1, wherein:
   the specific offset value has a value based on a number of association pattern periods.

4. The method of claim 3, wherein:
   a value based on the number of associated pattern periods is provided to the UE through at least one of the DCI, radio resource control (RRC) message, or medium access control-control element (MAC-CE).

**5.** The method of claim 1, wherein:

the specific offset value is a sum of a timing advance (TA) and an additional offset value, and
the additional offset value is predefined or configured by the base station.

**6.** The method of claim 5, wherein:
the TA is one of a UE-specific TA based on round-trip-delay (RTD) between the UE and a non-terrestrial communication device, a common TA based on RTD between the base station and the non-terrestrial communication device, or a sum values of the UE-specific TA and the common TA.

**7.** The method of claim 5, wherein:
the TA is a time duration calculated to compensate for a delay between the uplink slot n and the downlink slot n.

**8.** The method of claim 5, wherein:

the DCI includes the specific offset value and a timing window size for transmission of the random access preamble, and
the specific RO is an RO that satisfies a specific condition among ROs existing within a timing window size from a time point after the specific offset value from the uplink slot n.

**9.** The method of claim 8, wherein:
the RO satisfying the specific condition is a next available RO after the TA from the downlink slot n.

**10.** The method of claim 1, wherein:

the specific RO is selected from at least one RO that exist after a sum of the specific offset value and the second time duration from the uplink slot n, and
the second time duration is a time duration between a time point determined by the first time duration and a time point determined by the specific offset value.

**11.** The method of claim 1, wherein:
the specific RO is an RO determined among next available ROs after a later time point between the specific offset from the uplink slot n and the first time duration from downlink slot n.

**12.** The method of claim 1, wherein:
the wireless communication system is a non-terrestrial network (NTN) system.

**13.** A user equipment (UE) performing a random access procedure in a wireless communication system, the UE comprising:

at least one transceiver; and
at least one processor coupled to the at least one transceiver,
wherein the at least one processor is configured to:

receive, through the at least one transceiver, downlink control information (DCI) including a physical downlink control channel (PDCCH) order from a base station in a downlink slot n; and
transmit, through the at least one transceiver, a random access preamble to the base station at a specific random access channel occasion (RO),

wherein the specific RO is determined based on a specific offset value and a first time duration,
wherein the specific offset value is a timing offset value after an uplink slot n, and
wherein the first time duration is a time duration starting from the downlink slot n.

**14.** A method performed by a base station to perform a random access procedure in a wireless communication system, the method comprising:

transmitting downlink control information (DCI) including a physical downlink control channel (PDCCH) order to a user equipment (UE) in a downlink slot n; and

receiving a random access preamble from the UE at a specific random access channel occasion (RO),
wherein the specific RO is determined based on a specific offset value and a first time duration,
wherein the specific offset value is a timing offset value after an uplink slot n, and
wherein the first time duration is a time duration starting from the downlink slot n.

15. A base station performing a random access procedure in a wireless communication system, the base station comprising:

   at least one transceiver; and
   at least one processor coupled to the at least one transceiver,
   wherein the at least one processor is configured to:

      transmit, through the at least one transceiver, downlink control information (DCI) including a physical downlink control channel (PDCCH) order from a base station in a downlink slot n; and
      receiver, through the at least one transceiver, a random access preamble to the base station at a specific random access channel occasion (RO),

   wherein the specific RO is determined based on a specific offset value and a first time duration,
   wherein the specific offset value is a timing offset value after an uplink slot n, and
   wherein the first time duration is a time duration starting from the downlink slot n.

16. A processing device configured to control a user equipment (UE) to perform a random access procedure in a wireless communication system, the processing device comprising:

   at least one processor; and
   at least one computer memory operatively coupled to the at least one processor and storing instructions for performing operations upon being executed by the at least one processor,
   wherein the operations comprise:

      receiving downlink control information (DCI) including a physical downlink control channel (PDCCH) order from a base station in a downlink slot n; and
      transmitting a random access preamble to the base station at a specific random access channel occasion (RO),

   wherein the specific RO is determined based on a specific offset value and a first time duration,
   wherein the specific offset value is a timing offset value after an uplink slot n, and
   wherein the first time duration is a time duration starting from the downlink slot n.

17. At least one non-transitory computer readable medium storing at least one instruction, wherein:

   the at least one instruction executed by at least one processor controls a device which performs a random access procedure in a wireless communication system to perform:

      receiving downlink control information (DCI) including a physical downlink control channel (PDCCH) order from a base station in a downlink slot n; and
      transmitting a random access preamble to the base station at a specific random access channel occasion (RO),

   wherein the specific RO is determined based on a specific offset value and a first time duration,
   wherein the specific offset value is a timing offset value after an uplink slot n, and
   wherein the first time duration is a time duration starting from the downlink slot n.

# FIG.1

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

FIG.6

| INITIAL CELL SEARCH | SYSTEM INFORMATION RECEPTION | RANDOM ACCESS PROCEDURE | | | | GENERAL DL/UL Tx/Rx | |

PSS/SSS& [DLRS]& PBCH — S601

PDCCH/ PDSCH (BCCH) — S602

PRACH — S603

PDCCH/ PDSCH — S604

PUSCH — S605

PDCCH/ PDSCH — S606

PDCCH/ PDSCH — S607

PUSCH/ PUCCH — S608

· DL/UL ACK/NACK
· UE CQI/PMI RI REPORT
  USING PUSCH AND PUCCH

# FIG.7

Satellite
(or UAS platform)

Service
link

Feeder link

Gateway

Data
network

User
Equipments

Beam foot
print

Field of view of the satellite(or UAS platform)

(a)

(or UAS platform)

(or UAS platform)

ISL

Satellite

Satellite

Feeder
link

Service
link

Feeder link
(mandatory if no ISL)

Gateway

Data
network

User
Equipments

Beam foot
print

Field of view of the satellite(or UAS platform)

(b)

EP 4 280 790 A1

# FIG.8

- Common TA(Tcom) = 2*D0/c
- UE specific differential TA for xth UE (TUEx) = 2*(D1x−D0)/c
- Full TA(Tfull) = Tcom + TUEx

(a) Regenerative payload

- Common TA(Tcom) = 2*(D01+D02)/c
- UE specific differential TA for xth UE (TUEx) = 2*(D1x−D01)/c
- Full TA(Tfull) = Tcom + TUEx

(b)Transparent payload

# FIG.9

Last symbol of the
PSCCH order reception

UE can transmit PRACH in the
RO behind this point

Selected RO at UE side

Time

$N_{T,2} + \Delta_{BWPSwitching} + \Delta_{Delay} + T_{swithch}$

First symbol of the
PRACH transmission

(a)

Last symbol of the
PDCCH order reception

UE can transmit PRACH in the
RO behind this point

Selected RO at UE side

Time

First symbol of the
PRACH transmission

$N_{T,2} + \Delta_{BWPSwitching} + \Delta_{Delay} + T_{swithch}$

Initial TA =
Common TA + UE specific TA

(b)

Last symbol of the
PDCCH order reception

UE can transmit PRACH in the
RO behind this point

Selected RO at UE side

Time

$N_{T,2} + \Delta_{BWPSwitching} + \Delta_{Delay} + T_{swithch} +$
Additional timing offset

First symbol of the
PRACH transmission

Initial TA =
Common TA + UE specific TA

(c)

# FIG.10

Association pattern period | Association pattern period | Association pattern period

gNB     ROs

SSB0 SSB1 SSB2 SSB3     SSB0 SSB1 SSB2 SSB3     SSB0 SSB1 SSB2 SSB3

PDCCH order TX/RX
SSB D = 0, Mask ID = 1

Omitted Association
pattern period = 1

Association pattern period | Association pattern period | Association pattern period

UE     ROs

SSB0 SSB1 SSB2 SSB3     SSB0 SSB1 SSB2 SSB3     SSB0 SSB1 SSB2 SSB3

Initial TA on UE side

UE can TX in this RO

EP 4 280 790 A1

## FIG.11

RECEIVING DCI INCLUDING
A PDCCH ORDER FROM A
BASE STATION IN A
DOWNLINK SLOT N ── S1110

↓

TRANSMITTING A RANDOM
ACCESS PREAMBLE TO THE
BASE STATION AT A
SPECIFIC RO ── S1120

## FIG.12

TRANSMITTING DCI
INCLUDING A PDCCH
ORDER TO A UE IN A
DOWNLINK SLOT N ── S1210

↓

RECEIVING A RANDOM
ACCESS PREAMBLE FROM
THE UE AT A SPECIFIC RO ── S1220

FIG.13

Base Station                                    UE

Configuration information (S105)

Control Information (S110)

UL data/channel (S115)

# FIG.14

<div style="text-align:center">

**INTERNATIONAL SEARCH REPORT**

</div>

| International application No. |
|---|
| **PCT/KR2022/000415** |

**A.     CLASSIFICATION OF SUBJECT MATTER**

**H04W 74/08**(2009.01)i; **H04W 74/00**(2009.01)i; **H04W 72/12**(2009.01)i; **H04W 72/04**(2009.01)i; **H04W 56/00**(2009.01)i; **H04W 84/06**(2009.01)i

According to International Patent Classification (IPC) or to both national classification and IPC

**B.     FIELDS SEARCHED**

Minimum documentation searched (classification system followed by classification symbols)

H04W 74/08(2009.01); H04B 7/00(2006.01); H04L 5/00(2006.01); H04W 72/04(2009.01); H04W 84/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스 오케이션(RA occasion), 시구간(time duration), 비지상 네트워크 (NTN), 타이밍 오프셋(timing offset)

**C.     DOCUMENTS CONSIDERED TO BE RELEVANT**

| Category* | Citation of document, with indication, where appropriate, of the relevant passages | Relevant to claim No. |
|---|---|---|
| Y | KR 10-2020-0018737 A (LG ELECTRONICS INC.) 19 February 2020 (2020-02-19)<br>See paragraphs [0036] and [0138]; claim 1; and figure 14. | 1-7,12-17 |
| A | | 8-11 |
| Y | US 2020-0351955 A1 (JEON, Hyoungsuk et al.) 05 November 2020 (2020-11-05)<br>See paragraph [0332]. | 1-7,12-17 |
| Y | KR 10-2020-0086217 A (KT CORPORATION) 16 July 2020 (2020-07-16)<br>See paragraphs [0008] and [0240]. | 6-7,12 |
| A | WO 2020-227075 A1 (QUALCOMM INCORPORATED) 12 November 2020 (2020-11-12)<br>See paragraphs [0068]-[0089]; and figures 4-6. | 1-17 |
| A | WO 2020-222891 A1 (QUALCOMM INCORPORATED) 05 November 2020 (2020-11-05)<br>See claims 1-3. | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 April 2022** | **22 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

| International application No. |
| --- |
| **PCT/KR2022/000415** |

| Patent document cited in search report | | | Publication date (day/month/year) | Patent family member(s) | | | Publication date (day/month/year) |
| --- | --- | --- | --- | --- | --- | --- | --- |
| KR | 10-2020-0018737 | A | 19 February 2020 | CN | 110050506 | A | 23 July 2019 |
| | | | | CN | 110870377 | A | 06 March 2020 |
| | | | | EP | 3534666 | A1 | 04 September 2019 |
| | | | | EP | 3537817 | A1 | 11 September 2019 |
| | | | | EP | 3678316 | A1 | 08 July 2020 |
| | | | | JP | 2020-507279 | A | 05 March 2020 |
| | | | | JP | 2020-507972 | A | 12 March 2020 |
| | | | | JP | 2020-509693 | A | 26 March 2020 |
| | | | | JP | 6843252 | B2 | 17 March 2021 |
| | | | | JP | 6858877 | B2 | 14 April 2021 |
| | | | | KR | 10-2019-0057205 | A | 28 May 2019 |
| | | | | KR | 10-2019-0086371 | A | 22 July 2019 |
| | | | | KR | 10-2104902 | B1 | 29 May 2020 |
| | | | | KR | 10-2116682 | B1 | 29 May 2020 |
| | | | | KR | 10-2273753 | B1 | 06 July 2021 |
| | | | | US | 10609735 | B2 | 31 March 2020 |
| | | | | US | 10624136 | B2 | 14 April 2020 |
| | | | | US | 10798751 | B2 | 06 October 2020 |
| | | | | US | 2019-0208550 | A1 | 04 July 2019 |
| | | | | US | 2019-0223223 | A1 | 18 July 2019 |
| | | | | US | 2019-0223228 | A1 | 18 July 2019 |
| | | | | US | 2020-0221510 | A1 | 09 July 2020 |
| | | | | WO | 2019-098770 | A1 | 23 May 2019 |
| | | | | WO | 2019-139298 | A1 | 18 July 2019 |
| | | | | WO | 2019-139299 | A1 | 18 July 2019 |
| US | 2020-0351955 | A1 | 05 November 2020 | None | | | |
| KR | 10-2020-0086217 | A | 16 July 2020 | WO | 2020-145558 | A2 | 16 July 2020 |
| WO | 2020-227075 | A1 | 12 November 2020 | KR | 10-2022-0002925 | A | 07 January 2022 |
| | | | | US | 2020-0351918 | A1 | 05 November 2020 |
| WO | 2020-222891 | A1 | 05 November 2020 | CN | 113728710 | A | 30 November 2021 |
| | | | | US | 10980067 | B2 | 13 April 2021 |
| | | | | US | 2020-0351947 | A1 | 05 November 2020 |
| | | | | US | 2021-0195656 | A1 | 24 June 2021 |
| | | | | US | 2022-0007428 | A1 | 06 January 2022 |

Form PCT/ISA/210 (patent family annex) (July 2019)